(19) Europäisches Patentamt
European Patent Office
Office européen des brevets

(11) **EP 4 681 549 A1**

(12) **EUROPEAN PATENT APPLICATION**

(43) Date of publication:
**21.01.2026 Bulletin 2026/04**

(21) Application number: **25185477.4**

(22) Date of filing: **26.06.2025**

(51) International Patent Classification (IPC):
**A23L 19/00** (2016.01) **C11B 3/00** (2006.01)

(52) Cooperative Patent Classification (CPC):
**A23L 19/07; A23L 19/09; C11B 3/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.07.2024 IT 202400016831**

(71) Applicant: **Mattei, Alissa**
**58024 Massa Marittima (GR) (IT)**

(72) Inventors:
• **MATTEI, Alissa**
**58024 Massa Marittima (GR) (IT)**
• **TOMBARI, Elpidio**
**56017 San Giuliano Terme (PI) (IT)**
• **CIPRIANI, Nicola**
**50026 San Casciano in Val di Pesa (FI) (IT)**

(74) Representative: **Luppi Intellectual Property S.r.l.**
**Viale Corassori, 54**
**41124 Modena (IT)**

(54) **METHOD FOR RECOVERING OIL AND NUTRACEUTICAL AND ORGANOLEPTIC COMPOUNDS FROM OLIVE MILLING WASTES**

(57) A method for recovering oil and nutraceutical and organoleptic compounds from olive milling waste comprises the following steps: adding a food grade vegetable oil to waste coming from a first extraction of a virgin olive oil, in which the waste contains vegetation waters and olive-pomace containing residual olive oil; mixing the food grade vegetable oil and the waste, so as to obtain a multiphase mixture comprising an oil phase, an aqueous phase and a solid phase, in which the oil phase comprises the residual olive oil and the food grade vegetable oil, the aqueous phase comprises the vegetation waters and the solid phase comprises the olive-pomace; subjecting the multiphase mixture to mechanical separation, so as to separately obtain the olive-pomace, the vegetation waters and an enriched must-blend that is enriched with nutraceutical and organoleptic compounds, comprising the residual olive oil contained in the waste and the food grade vegetable oil; discarding the olive-pomace and subjecting the vegetation waters to cryoconcentration, so as to obtain concentrated vegetation waters and frozen vegetation waters; discarding the frozen vegetation waters and mixing the concentrated vegetation waters with the enriched must-blend; subjecting to mechanical separation the mixture consisting of the concentrated vegetation waters and of the enriched must-blend, so as to obtain separately vegetation waters, to be discarded, and an oil blend that is enriched with nutraceutical and organoleptic compounds.

"Aqueous phase" Vegetation waters

"Oil phase" residual oil + vegetable oil

"Solid phase" Olive-pomace

FORMATION OF OIL BLEND AND ENRICHMENT FROM WASTE

"Oil phase" Oil blend

Liquid fraction Vegetation waters

Frozen fraction Vegetation waters

CRYOCENTRATION OF VEGETATION WATERS AND ENRICHMENT OF OIL FRACTION

**Fig. 1**

EP 4 681 549 A1

**Description**

The invention relates to a method for recovering oil and nutraceutical and organoleptic compounds from olive milling waste. The invention can be applied industrially in the sector of the production of vegetable oils for food use.

The processing of olives, aimed at the extraction of extra virgin olive oil, entails the production of certain byproducts (for example the so-called "olive stone fragments", i.e. the crushed and washed olive stones) and actual waste (wet olive-pomace and vegetation waters). The study of the vegetation waters, which is widely extant in the scientific literature, has highlighted important hydrophilic products that are partially present in the unsaponifiable fraction of the oil and fall within the category of the nutraceutical compounds.

Scientific research has highlighted over the years the importance of the nutritional values and the nutraceutical capacity of the various components present in the olives and in the extracted oil. In parallel, olive oil production costs have increased over the years - also due to the climate change and pathogens such as *Xylella fastidiosa* - and today it is strongly necessary to contain the aforementioned costs, so as to make a finished product available at an appropriate price. Suitable solutions could be provided by exploiting processing byproducts. However, the use of the latter is not free from drawbacks, which are essentially due to currently known and used methods.

In modern mills, the phases generated in the processing procedure during the extraction of the virgin oils are essentially two: oil-must; wet olive-pomaces with vegetation waters. In particular, the oil-must contains (together with the oil) a small amount of vegetation waters, which are subsequently separated from the oil by using a vertical centrifuge. The wet olive-pomaces mixed with the vegetation waters contain the olive stone fragments, which are separated as a byproduct, and a considerable amount of oil, that is equal to 10% - 20% of the oil present in the olives.

In some large mills, the recovery of the residual oil in the fresh milling waste is made *in situ* through a second mechanical extraction that is run downstream of the first extraction, after recovering the olive stone fragments. The oil recovery is equal to 20% - 30% of the oil present in the waste and the adopted processing, in order to maximize the yield, requires water to be added and the temperature to be increased up to about 50 °C.

A drawback of the method disclosed above consists of the cost of the extraction process, which is significantly high in relation to the extraction yield. The implementation of this method is thus interesting only for large milling plants.

Another drawback of the method disclosed above is that the oil extracted through the second extraction (so-called "olive oil of second extraction") is typically of a more intense green colour than the oil of first extraction and, as a result of to the chemical parameters thereof, it does not have the properties of the extra virgin olive oil (Di Giovacchino, L.; Preziuso, S.M.; Di Serio, M.G.; Mucciarella, M.R.; Di Loreto, G.; Lanza, B. Double extraction of olive oil in large oil mills of Southern ,Italy: Effects on extraction efficiency, oil quality, and economy of the process. Eur. J. Lipid Sci. Technol. 2017, 119, 1600161).

The most traditional method for recovering residual oil from milling waste consists of the processing of olive-pomace, i.e. the solid part of the waste, having a water content depending on the adopted milling process (traditional, three- or two-phase continuous) (Sánchez Moral, P.; Ruiz Méndez, V. Production of pomace olive oil. Grasas Y Aceites, 2006, 57 (1), 47-55). The processing of olive-pomace, made in olive-pomace processing plants days/weeks after milling, is carried out on waste that is no longer fresh by using a solvent. A crude olive-pomace oil is thus obtained with a 100% yield, which has to be refined and to which virgin olive oil has to be added in order for it to be commercialized as "olive-pomace and olive oil". The processing of olive-pomace represented a favourite method in the past when the olive-pomaces, typically produced by pressing, were dry. Today, on the other hand, continuous separation processes are mainly applied using two- or three-phase decanters, and the produced olive-pomaces are rich in water, i.e. wet olive-pomaces.

A drawback due to the presence of water in the olive-pomaces is that this greatly increases transport and processing costs for the olive-pomace processing plants.

Another drawback is that the olive-pomace oil, even after being subjected to the processing that is necessary to enable it to enter the market of cooking oils, has a market value that is about 50% of the market value of extra virgin olive oil.

In addition to the recovery of residual oil, milling waste has for some time been of interest for the recovery of nutraceutical substances and in particular of antioxidant substances. The typical approach is to use the extraction by separation/filtration, also with the use of solvents (Stramarkou, M.; Missirli, T.-V.; Kyriakopoulou, K.; Papadaki, S.; Angelis-Dimakis, A.; Krokida, M. The Recovery of Bioactive Compounds from Olive Pomace Using Green Extraction Processes. Resources 2023, 12, 77; Grigoletto, I.; Garcia Salas, P.; Valli, E.; Bendini, A.; Ferioli, F.; Pasini, F.; Sánchez Villasclaras, S.; Garcia-Ruiz, R.; Gallina Toschi, T. HPLC-MSIMS Phenolic Characterization of Olive Pomace Extracts Obtained Using an Innovative Mechanical Approach. Foods 2024, 13, 285). A drawback of the aforesaid approach is due to the use of the solvents, with a consequent increase in process and disposal costs.

Another possibility for recovering and using oil and other components from milling waste is the olive pâté, that is separated in the mill from the fragments of olive stone with the use of a multiphase decanter (DMF). A drawback of this product, which is *per se* potentially interesting, is that research and experimentation are still necessary in order to reach a market opportunity that is economically sustainable (Tufariello, M.; Durante, M.; Bleve, G.; Veneziani, G.; Taticchi, A.; Servili, M.; Mita, G. Patè olive cake: Possible exploitation of a by-product for food applications. Front. Nutr. 2019, 8, 83).

Lastly, the growing commercialization of food products called "seasonings" should be noted, consisting of mixtures of vegetable oils of various origins and also containing minimal amounts of aromas. The vegetable oils constituting the aforesaid mixtures are chosen to meet the demands of the user by combining the properties of the mixed oils, including the demand for a moderate price. These seasonings are thus presented as products that are potentially "alternatives" to olive oil, in order to meet the growing demand and the request for low prices.

Nevertheless, many of these seasonings contain a considerable amount of olive oil, in particular extra virgin olive oil, both for organoleptic and nutraceutical reasons and in order to improve oxidation stability during storage or use of the seasonings. Consequently, the drawbacks connected to the olive oil production crisis of and/or to known methods for recovering olive oil from milling waste adversely affect also the aforesaid seasonings.

Therefore, the persons skilled in the art strongly feel the need for a technical solution for recovering oil and useful substances from milling waste, in particular nutraceutical and organoleptic compounds, which technical solution enables the various prior art drawbacks to be overcome.

Objects of the invention

An object of the invention is to improve known methods for recovering oil and nutraceutical and organoleptic compounds from olive milling waste.

Another object is to provide a method for recovering oil and nutraceutical and organoleptic compounds from olive milling waste, which method enables products to be obtained that are rich in nutraceutical and organoleptic compounds, which products are usable as olive oil substitutes.

A further object is to provide a method for recovering oil and nutraceutical and organoleptic compounds from olive milling waste, which method enables products to be obtained that are rich in nutraceutical and organoleptic compounds, which products are saleable at prices that are substantially low in comparison with the prices of olive oil.

Still another object is to provide a method for recovering oil and nutraceutical and organoleptic compounds from olive milling waste, which method is implementable only through mechanical processes, at a low temperature and without using solvents.

Short description of the invention

In a first aspect of the invention, a method is provided for recovering oil and nutraceutical and organoleptic compounds from olive milling waste, as defined in claim 1.

In a second aspect of the invention, a method is provided for recovering oil and nutraceutical and organoleptic compounds from olive milling waste, as defined in claim 2.

Owing to the invention, a method is made available for recovering oil and nutraceutical and organoleptic compounds from milling waste, which method enables the aforementioned objects to be achieved. The method according to the invention is based on the combination of two different procedures.

In a first procedure, a refined vegetable oil is added to the fresh milling waste and the so obtained mixture is processed mechanically at a controlled temperature, producing a multiphase compound - consisting of the partially deoiled aqueous milling waste and of the vegetable oil - in which a chemical balance is established with formation of an oil phase. The multiphase compound is centrifuged, with a resulting separation, namely extraction, of the oil phase. The extracted oil phase, as a result of the chemical balance, is a mixture (enriched oil blend) consisting of the vegetable oil added to the milling waste, of the olive oil present in the waste, as well as of nutraceutical and organoleptic compounds that are contained in the added vegetable oil and are recovered from the latter.

In the second procedure, the concentration of nutraceutical and organoleptic compounds contained in the extracted oil phase is increased. In particular, the vegetation waters are separated (by centrifugation) from the milling waste and concentrated cryogenically, namely they are subjected to partial freezing with contextual removal of the ice. The cryoconcentration of the vegetation waters, which removes part of the water from the vegetation waters, increases partition of the dissolved compounds among the phases also to the benefit of the oil phase. The cryoconcentrated vegetation waters are mixed at controlled temperature with the oil phase to obtain a new chemical balance between the phases and the so obtained mixture is centrifuged to extract the oil phase. The oil end product extracted by centrifugation (cryo-enriched oil blend), which is made cold (i.e. by working at a temperature not exceeding 27°C) and by using only mechanical processes, after appropriate filtering is ready for use, both as a seasoning and as a cooking oil.

The cryoconcentration of the vegetation waters can be carried out upstream of (before) or downstream of (after) adding refined vegetable oil to the milling waste.

In one embodiment, the cryoconcentration of the vegetation waters is carried out after the refined vegetable oil has been added.

In another embodiment, the cryoconcentration of the vegetation waters is carried out before the refined vegetable oil is added.

In both embodiments of the method according to the invention, the cryoconcentration process enables the recovery of substances of interest, and thus of commercial value, that are contained in the milling waste to be optimized, inasmuch as the refined vegetable oil, which is recovered inside the blend formed with the residual olive oil in the waste, carries with itself a high percentage of phenolic compounds.

The method according to the invention thus enables an important fraction of useful substances to be recovered that are present in the vegetation waters and in the fresh wet olive-pomaces constituting the olive milling waste and that are not extractable using known methods. In particular, it is possible to recover about 90% of the olive oil contained in the milling waste (i.e. between 10% and 20% of the oil contained in the olives), as well as the nutraceutical (compounds of food origin that have pharmacological properties) and organoleptic compounds contained in the olives, which compounds are transferred only partially to the extra virgin oil that is extracted from the olives through the known methods and which characterize extra virgin olive oil (EVO). The latter contains various compounds exhibiting anti-inflammatory, antioxidant, cardioprotective, antitumoral activity. In particular, the triglyceride part of the EVO comprises, for example, monounsaturated fatty acids (oleic acid in particular) that affect HDL and LDL, $\alpha$-Linolenic acid (n-3 unsaturated fatty acid of the omega-3 series) that affects cholesterol. The unsaponifiable component comprises, for example, squalene, $\beta$-carotene, chlorophyll, sterols, phenolic compounds (phenolic acids and secoiridoids, like oleacein and oleocanthal), lignans (provided with antioxidant and anti-inflammatory activity), tocopherols (provided with antioxidant activity). All the aforesaid compounds act synergically *in vitro* and *in vivo*. $\beta$-carotene and chlorophyll are responsible for the colour of the oil, whereas phenolic compounds and volatile compounds (ethers, ketones and aldehydes) are responsible for the taste and smell of the oil.

The aforesaid nutraceutical and organoleptic compounds enable an extra virgin olive oil to be distinguished from a generic vegetable oil. The latter is typically an oil extracted from oily seeds and from cereals, which oil has to be refined in order to have organoleptic properties that are suitable for the use thereof in cookery and which thus contains only partially nutraceutical and organoleptic compounds that are analogous to the nutraceutical and organoleptic compounds contained in olives (in particular vitamin E, squalene, but not phenolic compounds). Therefore, the method according to the invention enables the fresh olive milling waste to be exploited from the nutritional point of view, before this waste is assigned to secondary uses - such as for example extractions of other residual compounds, sources of energy, fertilisers - or are disposed of as industrial waste.

Short description of the drawings

The invention can be better understood and implemented with reference to the enclosed drawings that illustrate an embodiment thereof by way of non-limiting example, in which:

Figure 1 illustrates schematically multiphase compounds formed during the implementation of the method according to the invention and the migration between the phases of secondary compounds (organoleptic and nutraceutical compounds) contained therein;
Figure 2 is a block diagram illustrating schematically two alternative methods of experimental implementation of the method according to the invention;
Figure 3 consists of three graphs illustrating the difference in fatty acid content of enriched blends compared to added refined vegetable oils and the contribution made to the aforesaid difference by the presence, in each blend, of a fraction by weight of residual olive oil that replaces the same amount of refined vegetable oil;
Figure 4 consists of two graphs, graph A of which shows colour values measured at two different wavelengths, corresponding to the chromatic contribution of $\beta$-carotene and chlorophyll, for enriched blend and added vegetable oil samples, in the method according to the invention, and graph B shows unsaponifiable component values measured for the same samples as in graph A;
Figure 5 consists of two graphs, graph A of which shows a comparison between total polyphenols measured in enriched blend and added vegetable oil samples, and graph B shows values of the induction time to forced oxidation (Rancimat test at 120°C), measured for the same samples as in graph A and expressed graphically as a function of the total polyphenol content in the single samples;
Figure 6 is a block diagram illustrating schematically two embodiments, which are implementable in the mill, of the method according to the invention.

Detailed description of the invention

In the present description, as well as in the attached claims:

- "cryocentration" and "cryocentrating" indicate a procedure, which is comprised in the method according to the invention, in which vegetation waters (separated by centrifugation from olive milling waste) are subjected to partial freezing with simultaneous removal of the ice;
- "cryo-enrichment" and "cryo-enriching" indicate a procedure, which is comprised in the method according to the invention, in which cryoconcentrated vegetation waters are mixed with an oil phase (extracted by centrifugation from a mechanically processed mixture of refined vegetable oil and olive milling waste, or consisting of a refined vegetable oil mixed with olive-pomace containing residual oil) and the so obtained mixture is centrifuged to extract a further oil phase, which is particularly enriched in nutraceutical and organoleptic compounds;
- the wording "oil blend" indicates a mixture of oils;
- the wording "cryo-enriched oil blend" indicates an oil blend that has been enriched with nutraceutical and organoleptic compounds by using cryoconcentrated vegetation waters;
- the wording "oil-must" indicates an oil phase exiting the decanter that contains, in addition to the oil, a small fraction of vegetation waters;
- the wording "must-blend" indicates an intermediate product (in the form of an oil phase) of the method according to the invention, which consists of several types of oil exiting the decanter and which contains a small fraction of vegetation waters in addition to the oils;
- the wording "enriched must-blend" indicates a must-blend that has been enriched with nutraceutical and organoleptic compounds, constituted by the residual olive oil contained in the milling waste and by a food grade vegetable oil;
- the wording "cryo-enriched must-blend" indicates a must-blend that has been enriched with nutraceutical and organoleptic compounds by using cryoconcentrated vegetation waters;
- with reference to an olive oil, the term "first extraction" indicates the product that is obtained from olive milling;
- with reference to an olive oil, the wordings "EVO" and "extra virgin olive oil" are considered to be synonyms and can be used interchangeably;
- with reference to a sunflower seed oil, the wordings "GAO" and "high oil sunflower" are considered to be synonyms and can be used interchangeably;
- the term "olive-pomace" indicates the solid residue obtained from olive milling, which residue consists of skins, stones and pulp of the pressed olives;
- the term "pâte" indicates a watery milling waste of the olives that is free of olive stone fragments, namely free of the fragments of the crushed olive stones.

The method according to the invention is based on the mechanical processing of a compound obtained by mixing the fresh milling/pressing waste of the olives with a vegetable oil, the nature and quantity of which are suitably selected on the basis of the used waste.

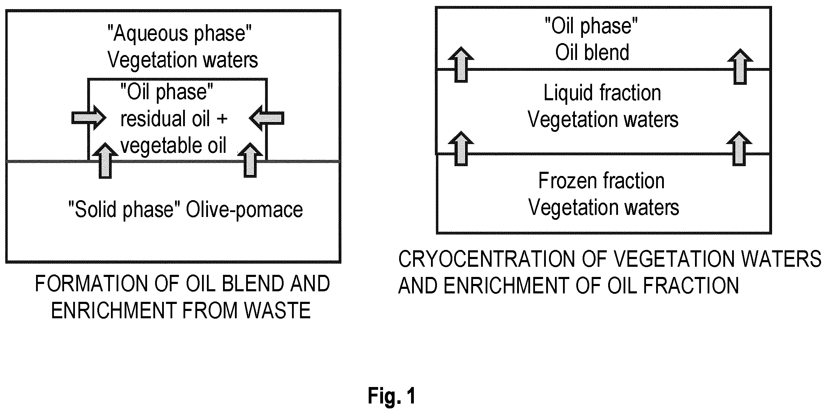

The mixing provided for by the method produces a multiphase compound, which is outlined as a combination of three phases that are immiscible among themselves: "aqueous phase" (milling vegetation waters), "solid phase with several components" (solid components of the pressed olives, such as fragments of stone, pulp and skins, namely the olive-pomace), "oil phase" (residual olive oil in the waste and vegetable oil that is added in appropriate amount). Figure 1 illustrates schematically the multiphase compound that forms when the method according to the invention is implemented and the migration among the phases of secondary compounds (organoleptic and nutraceutical compounds) contained therein. In the two (right and left) boxes of Figure 1, the arrows indicate the transfer of the compounds among the phases, for chemical rebalance.

As a result of the olive milling, the waste contains about 2% - 3% by weight of the aforesaid oil phase. The method according to the invention provides for increasing the oil phase, by adding the vegetable oil, until it reaches about 20% - 25% of the total weight. The so obtained enriched oil phase is a blend constituted by the residual olive oil in the waste and by the added vegetable oil.

The added vegetable oil, due to the apolarity and chemical affinity thereof, acts as a solvent on the residual oil remaining in the solid waste and mixes therewith to form a blend. The added vegetable oil acts as a solvent also for all the secondary compounds that, due to the chemical nature and polarity thereof, have partial affinity with both the vegetation waters and the oil phase. Therefore, as a result of the addition of vegetable oil, a part of the secondary compounds present in the vegetation waters, namely in the aqueous phase, migrates into the oil phase, which is initially poor in the secondary compounds that are contained in the olives and are absent in the seeds or in the cereals from which the added vegetable oil derived.

In Figure 1, the box on the left illustrates schematically the migration of the secondary components among the phases of the multiphase compound, obtained by mixing the waste and the added vegetable oil. Mixing is carried out mechanically and at controlled temperature (max 27°C) to obtain a partition between the immiscible phases of the great variety of nutraceutical and organoleptic compounds present in the milled olives (chlorophyll, sugars, vitamins, biophenols, etc.) and in part also produced during the first extraction of the extra virgin oil. The partition among the three phases occurs according to the chemical balance, which is dictated by the physical conditions imposed on the multiphase system and by the molecular interactions of the individual molecular species dispersed on the surfaces of the solids and inside the two immiscible liquid phases (Leo A.; Hansch, C.; Elkins, D. Partition coefficients and their uses. Chem. Rev. 1971, 71, 6, 525-616).

To the mixing of the waste with the vegetable oil a second process is added, owing to which the compounds of interest, contained in the vegetation waters, are concentrated in order to promote the transfer thereof into the oil phase. In particular, the vegetation waters are subjected to cryoconcentration, with a resulting reduction in the water content thereof. The cryoconcentration comprises the following steps: preliminarily separating the vegetation waters from the solid residue (olive-pomace); partially freezing the vegetation waters; separating mechanically and discarding the frozen part of water (about 50% of the initial vegetation waters), which is poor in dissolved components, collecting the liquid part. The latter, in which the concentration of compounds of interest is increased by about 50%, is used to enrich the aforesaid blend constituted by the residual olive oil in the waste and by the added vegetable oil.

In Figure 1, the box on the right illustrates schematically the migration of the secondary components from the solid phase (ice) to the liquid phase of the vegetation waters during cryoconcentration and from the liquid phase of the concentrated vegetation waters to the oil phase (blend), during the subsequent enrichment of the latter.

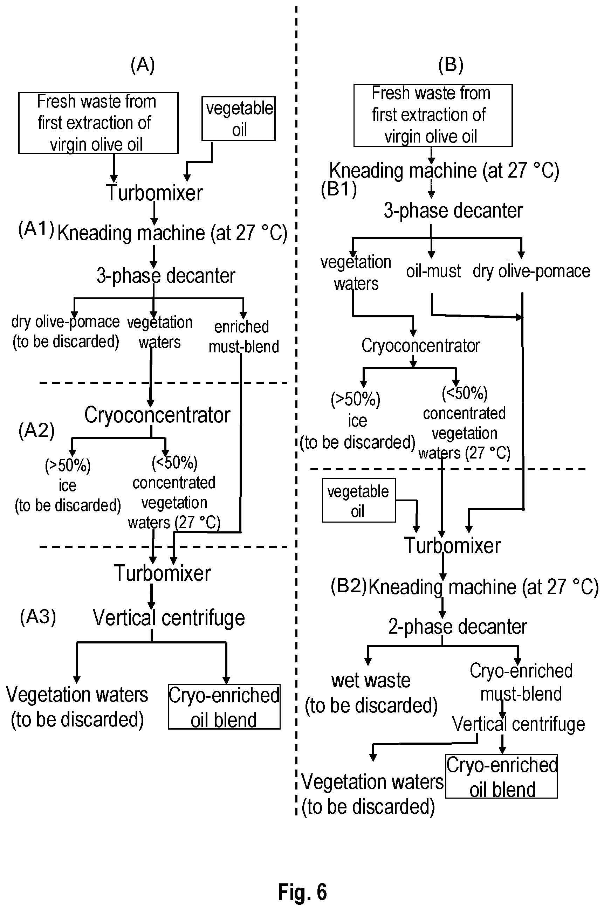

In a first embodiment (shown in diagram A of Figure 6), the method according to the invention comprises the following steps:

a) Adding a food grade vegetable oil to waste coming from a first extraction of a virgin olive oil, in which the waste contains vegetation waters and olive-pomace containing residual olive oil;
b) Mixing the food grade vegetable oil with the waste, so as to obtain a multiphase mixture comprising an oil phase, an aqueous phase and a solid phase, in which the oil phase comprises the residual olive oil and the food grade vegetable oil, the aqueous phase comprises the vegetation waters and the solid phase comprises the olive-pomace;
c) Subjecting the multiphase mixture to mechanical separation, so as to separately obtain the olive-pomace, the vegetation waters and an enriched must-blend, which comprises the residual olive oil and the food grade vegetable oil, in which the enriched must-blend is enriched with nutraceutical and organoleptic compounds;
d) Discarding the olive-pomace and subjecting the vegetation waters to cryoconcentration, so as to obtain concentrated vegetation waters and frozen vegetation waters;
e) Discarding the frozen vegetation waters and mixing the concentrated vegetation waters with the enriched must-blend;
f) Subjecting to mechanical separation the mixture consisting of the concentrated vegetation waters and the enriched must-blend, so as to obtain separately vegetation waters (to be discarded) and a cryo-enriched oil blend, consisting of the vegetable oil and of the residual olive oil and enriched with nutraceutical and organoleptic compounds.

The step of mixing the food grade vegetable oil with the waste can be carried out by using apparatuses of known type, such as a turbo mixer and subsequently a kneading machine. In one embodiment the mixing ratio between waste and vegetable oil is 4:1. In other embodiments, the mixing ratio between waste and vegetable oil can vary from 2:1 to 10:1.

The step of mechanical separation of the multiphase mixture can be carried out by using an apparatus of known type, such as a three-phase decanter.

The step of cryocentration of the vegetation water can be carried out by using an apparatus of known type, such as a cryoconcentrator.

The step of mixing the concentrated vegetation waters with the enriched oil blend can be carried out by using an apparatus of known type, such as a turbo mixer.

The step of mechanical separation of the mixture consisting of the concentrated vegetation waters and of the oil blend can be carried out by using an apparatus of known type, such as a vertical centrifuge.

All the steps comprised in the first embodiment of the method according to the invention are carried out at a temperature not exceeding 27°C and at atmospheric pressure.

In a second embodiment (shown in diagram B of Figure 6), the method according to the invention comprises the following steps:

a) Mixing waste coming from a first extraction of virgin olive oil, in which the waste contains vegetation waters and olive-pomace containing residual olive oil, so as to obtain a multiphase mixture comprising an oil phase, an aqueous phase and a solid phase, in which the oil phase comprises the residual olive oil, the aqueous phase comprises the vegetation waters and the solid phase comprises the olive-pomace;
b) Subjecting the multiphase mixture to mechanical separation, so as to separately obtain the olive-pomace containing residual olive oil, the vegetation waters and an oil-must containing part of the residual olive oil;
c) Subjecting the vegetation waters to cryoconcentration, so as to obtain concentrated vegetation waters and frozen vegetation waters;
d) Discarding the frozen vegetation waters, adding a food grade vegetable oil and mixing together the food grade vegetable oil, the concentrated vegetation waters, the olive-pomace and the oil-must obtained from the mechanical separation of the multiphase mixture;

e) Subjecting to mechanical separation the mixture consisting of the added food grade vegetable oil, the concentrated vegetation waters, the olive-pomace and the oil-must, so as to obtain separately wet waste (to be discarded), consisting of olive-pomace and vegetation waters, and a cryo-enriched must-blend comprising the added food grade vegetable oil e the residual olive oil and enriched with nutraceutical and organoleptic compounds;

f) Subjecting to mechanical separation the cryo-enriched must-blend, so as to obtain separately further vegetation waters (to be discarded) and a cryo-enriched oil blend, consisting of vegetable oil and residual olive oil and enriched with nutraceutical and organoleptic compounds.

The step of mixing the waste can be carried out by using apparatuses of known type, such as a kneading machine.

The step of mechanical separation of the multiphase mixture can be carried out by using an apparatus of known type, such as a three-phase decanter.

The step of cryocentration of the vegetation water can be carried out by using an apparatus of known type, like a cryoconcentrator.

The step of mixing the vegetable oil and the concentrated vegetation waters with the olive-pomace and the residual olive oil (obtained from the mechanical separation of the multiphase mixture) can be carried out by using apparatuses of known type, such as a turbo mixer and subsequently a kneading machine. In one embodiment the mixing ratio between waste and vegetable oil is 4: 1. In other embodiments, the mixing ratio between waste and vegetable oil can vary from 2: 1 to 10: 1.

The step of mechanical separation of the mixture consisting of the added vegetable oil, the concentrated vegetation waters, the olive-pomace and the residual olive oil can be carried out by using an apparatus of known type, such as a two-phase decanter.

The step of mechanical separation of the first oil blend can be carried out by using an apparatus of known type, such as a vertical centrifuge.

All the phases comprised in the second embodiment of the method according to the invention are carried out at a temperature not exceeding 27°C and at atmospheric pressure.

In both the first embodiment and second embodiment, the food grade vegetable oil can comprise, for example, olive oil, high oleic sunflower seed oil, maize seed oil, and mixtures thereof. In general, any food grade vegetable oil can be used that is liquid at ambient temperature and pressure.

The Applicants and Inventors of the present application have devised the method according to the invention, in the two embodiments disclosed above, on the basis of an in-depth experimental study. In the experimental study, olive milling waste belonging to different *cultivars,* with and without olive stone fragments, various types of vegetable oil and various weight ratios of waste/vegetable oil were used.

The outcomes of the conducted experimental study will be illustrated below by using the following Examples, which are not intended to limit in any manner the scope of the invention: implementation on the laboratory scale of the method according to the invention (Example 1); tested samples and physical-chemical analyses performed (Example 2); verification of the possibility of extracting the residual olive oil from the milling waste by adding vegetable oil (Example 3); recovery of components determining the colour and unsaponifiable components (Example 4); recovery of polyphenols (Example 5); oxidation stability evaluation (Example 6); evaluation of the content in sterols and triterpene alcohols (Example 7); sensory analysis (Example 8).

Example 1 - Implementation on the laboratory scale of the method according to the invention

The method according to the invention was implemented experimentally in the laboratory by adopting measures that were suitable to ensure the maintenance of the chemical-physical properties of the waste water (pâté generated by milling olives) to be used.

It is known that, at ambient temperature and with exposure to oxygen, the pâté of olives obtained by milling, as well as the waste produced by the extraction of the oil, oxidate rapidly and undergo processes of decomposition, fermentation and loss of volatile substances. Thus, in order to maintain the milling waste suitably fresh, which waste exits the mechanical separation systems (decanters and vertical centrifuges) used in the mills after about 30 min from olive pressing, it is necessary to limit the exposure of the waste to oxygen, light and ambient temperature to a few more minutes.

As it is not technically easy to test experimentally the method according to the invention directly in the mill and in real time (for various reasons, such as for example reproducibility of the waste in the time necessary to perform the various tests and space available in the mill for laboratory activities), the Applicants and Inventors have suitably collected and conserved the milling waste, so as to ensure sufficient conditions of freshness thereof, and have used the waste experimentally in times following collection at the mill.

The procedure adopted for the management of the waste was as follows:

i) Collection of about 25 kg of fresh water waste (pâté) directly exiting the multiphase decanter;

ii) Within 15 min of collection, packaging of the fresh aqueous waste in airtight containers (3l oil cans) and immediate cooling to 0°C by immersing the containers in water/ice;

iii) Transfer of the cans to a freezer at -18 ° C within two hours of packaging;

iv) Unfreezing the waste immediately before processing in the laboratory. Compared with laboratory processing carried out on the day after collection at the mill, laboratory processing carried out 4 months after collection has revealed negligible changes, both from the visual and olfactory point of view and in the chemical-physical characteristics of the prepared oil products.

The implementation of the method according to the invention in the laboratory was so designed as to obtain reproducible experimental conditions and in order to be able to fully explore process variables using a limited quantity of homogenous waste (a few tens of kg). For each test laboratory, 500 g to 700 g of the waste was used, depending on the relative concentrations of waste and added vegetable oil. The used laboratory instruments (of known type) are: scales, infrared thermometer, thermomixer (Bimby® model TM31), centrifuge (Beckman model Avant J-25).

The thermomixer was used to perform the following tasks:

i) the heating to 27 °C of the just thawed pâté;

ii) the vigorous mixing of the waste with the vegetable oil, typically for 1 min at speed 6 - a speed simulating the action of a mill olive press - so as to obtain a multiphase compound that has ample contact surfaces between the immiscible phases (small drops of oil in water); iii) the gentle mixing for 3 min at speed 3 - speed simulating the action of a mill kneading machine - so as to promote the chemical balance among the phases.

The centrifuge was used to separate mechanically the multiphase compound, so as to obtain stratification of dry solid phase, aqueous phase and oil phase.

The oil phase was recovered by a syringe and was filtered with a paper filter before being stored in hermetic jars kept in the refrigerator at 15°C and in the dark.

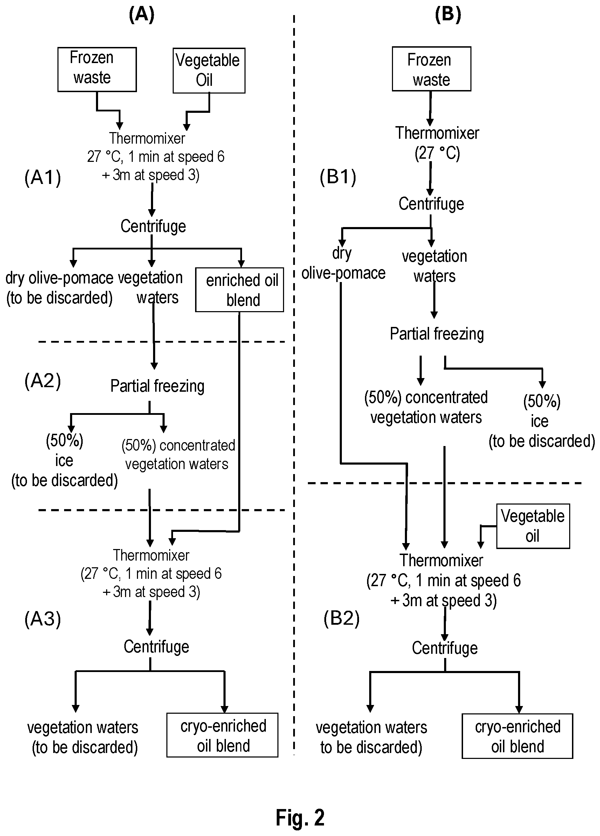

The cryoconcentration of the vegetation waters was performed by transferring the aqueous phase (vegetation waters), separated from the solid phase and from the oil phase by centrifugation, in a PET bottle that was then placed in the freezer for about 3 hours. The partially frozen waters were sieved with a metal strainer to remove 50% of the weight of the waters as ice. Once collected, the partially frozen and sieved waters were kept in the refrigerator at 3°C for a few hours waiting to be mixed (by thermomixer) at 27°C with the separated dry solid waste (processing B2 of Figure 2) or with the already enriched oil phase (process A3 of Figure 2). In both processes A and B, the enriched oil phase was separated by centrifugation, recovered by a syringe and filtered with a paper filter before being stored in hermetic jars, kept in the refrigerator at 15°C and in the dark, in hermetically sealed glass jars for the subsequent analyses.

The experimentation conducted in the laboratory can be summarized in two alternative paths, named operational path A and operational path B, which are illustrated respectively in diagrams A and B of Figure 2.

The operational path A involves the following processes:

A1) First enrichment of the vegetable oil with recovery of an enriched oil blend and mechanical separation of the vegetation waters;

A2) Cryocentration of the vegetation waters with removal of ice;

A3) Enrichment of the blend by the concentrated vegetation waters and final extraction of the oil blend that has been cryo-enriched with nutraceutical and organoleptic compounds.

The operational path B involves the following processes:

B1) Breaking down of the waste into vegetation waters and dried olive-pomace, followed by cryoconcentration of the vegetation waters with removal of ice;

B2) Reconstitution of the solid waste with concentrated vegetation waters and addition of the vegetable oil, with subsequent recovery by centrifugation of an oil blend formed by vegetable oil and residual olive oil, which has been cryo-enriched with nutraceutical and organoleptic compounds.

The two operational paths tested in the laboratory differ from one another substantially in the position of the process of cryoconcentration of the vegetation waters (processing A2 versus processing B1), respectively after or before the production of the enriched blend (processing A1 + processing A3 vs processing B2). The operational path B comprises a smaller number of oil phase manipulation steps and is thus less laborious than path A. At the laboratory level, it was however ascertained that the cryo-enriched blend obtained by the operational path A and the cryo-enriched blend obtained by the operational path B are provided with characteristics that are very similar in visual, sensory and oxidation stability terms.

Moving from the implementation on the laboratory scale to an implementation on an industrial scale (mill) of the method according to the invention, the operational path A, in which the vegetable oil is added immediately to make a first enriched blend, appears more easily implementable with reference to the separation of the oil phase from the waste. In fact, carrying out the process requires a first separation (processing A1), in which also the solid waste (olive-pomace) is present and which occurs in the presence of abundant vegetation waters, whereas the second separation (processing A3) relates only to an oil blend (oil + vegetation waters) for which a vertical centrifuge is expected to be sufficient. On the other hand, in the operational path B, there is a single separation of the oil phase (processing B2), which is however carried out in the presence of a reduced content of vegetation waters, following the cryoconcentration that is carried out in processing B1. In this case of reduced vegetation waters content, the use of the decanter, even if of the two-phase type, could have some performance and/or correct operation limits (this because the decanter operates suitably when there is an appropriate percentage of water in the compound to be separated).

With reference to the first and to the second embodiment of the method according to the invention, which have been disclosed previously, for a person skilled in the art it is clear that the first embodiment (diagram A of Figure 6) corresponds to the operational path A (diagram A of Figure 2) and the second embodiment (diagram B of Figure 6) corresponds to the operational path B (diagram B of Figure 2).

Between the first embodiment and the operational path A, the following correspondences substantially apply: steps a), b) and c) correspond overall to the processing A1; step d) corresponds to the processing A2; steps e) and f) correspond overall to the processing A3.

Between the second embodiment and the operational path B the following correspondences substantially apply: steps a), b) and c) correspond overall to the processing B1; steps d), e), f) correspond overall to the processing B2.

Example 2 - Tested samples and physical-chemical analyses performed

The chemical-physical analyses were conducted on samples prepared for the experimental testing of the method. The tested samples, and the chemical-physical analyses conducted thereupon, are set out in table 1 below:

Table 1

| Name of sample | Description | Origine | Fatty acids content | Absorbance 420 nm | Absorbance 453 nm | Unsaponifiable (g/kg) | Total polyphenols (mg/kg) | R.t. 120°C (h) |
|---|---|---|---|---|---|---|---|---|
| EVO | EVO from Coratina olives | Taken at mill | see Table 2 in Example 3 | 0.97 | 0.93 | 7.90 | 598 | 18.4 |
| OR | Residual olive oil from pâté of Coratina olives | Extraction with hexane | see Table 2 in Example 3 | - | - | - | - | - |
| GAO | High oleic sunflower seed oil | Commercially available product | see Table 2 in Example 3 | 0.05 | 0.02 | 3.76 | < 30 | 8.0 |
| M19 | GAO enriched by pâté (4:1) | Process A1 | see Table 2 in Example 3 | 1.11 | 0.65 | 4.18 | 536 | 15.3 |
| M19A | GAO cryo-enriched by pâté (4:1) | Process A1+A2+A3 | - | - | - | - | 620 | 16.6 |
| MAIZE | Maize oil | Commercially available product | - | - | - | - | - | 2.9 |
| M20 | MAIZE enriched by pâté (4:1) | Process A1 | - | - | - | - | - | 4.7 |
| RA | Refined olive oil | Commercially available product | see Table 2 in Example 3 | 0.12 | 0.07 | 9.06 | < 30 | 7.3 |
| M18 | RA enriched by pâté (4:1) | Process A1 | see Table 2 in Example 3 | 1.17 | 0.88 | 9.84 | 589 | 15.5 |
| M18A | RA cryo-enriched by pâté (4:1) | Process A1+A2+A3 | - | - | - | - | 718 | 17.3 |
| GAO - EVO | Mixture 70% GAO + 30% EVO | Mixing | - | - | - | - | 179* | 10.4 |
| RA-EVO | Mixture 70% RA + 30% EVO | Mixing | - | - | - | - | 179* | 10.2 |
| (R. t. = Rancimat test * = datum calculated on the basis of the linear combination of the values measured for the components of the blend | | | | | | | | |

EP 4 681 549 A1

In the Examples, the enrichments from olive milling waste were performed by using pâté (i.e. aqueous waste free of olive stone fragments) of Coratina olives, collected at mill during production. In the tests, three different commercially available refined vegetable oils were used, namely refined olive oil (RA), refined high oleic sunflower seed oil (GAO) and refined maize seed oil (MAIS), as well as an extra-virgin olive oil (EVO) extracted from Coratina olives and collected at mill. As prepared samples, enriched (M18, M19, M20) or cryo-enriched (M18A, M19A) blends by pâté were used, as well as two comparative blends (GAO-EVO, RA-EVO), obtained by mixing GAO (70%) or RA (70%) with the EVO (30%) collected at mill. The analyses were conducted by using known methods and apparatuses, which will not therefore be disclosed below. The unsaponifiable was calculated according to the method NGD C12-1976, the oil content of the olive-pomaces according to the method set out in EU Reg. 2105/2022 29/07/2022 GU UE L284 04/11/2022 Annex IV.

Example 3 - Verification of the possibility of extracting the residual olive oil from the milling waste by adding vegetable oil

For the above test, only the processing A1 disclosed in Example 1 was used, namely the cryoconcentration of the vegetable waters was not used.

Samples were prepared from three different refined vegetable oils:

- Refined olive oil (RA);
- Refined high oleic sunflower seed oil (GAO);
- Refined maize seed oil (MAIS).

From the chemical analyses (performed by specialized laboratories) performed on the Coratina pâté used in the Examples, the pâté was found to have a humidity content equal to 81%, whereas the residual olive oil (OR) of the pâté, extracted with hexane, amounts to 10.0% of the weight of the solid substance of the pâté. By combining the two analytical results, it is obtained that the percentage of residual oil extracted from the pâté by the hexane solvent amounts to 1.9 % of the weight of the fresh pâté as such.

The fatty acid composition of the residual olive oil (OR) extracted from the pâté (according to the method provided for by EU Reg. 2105/2022 29/07/2022 GU UE L284 04/11/2022 Annex IV), of the refined vegetable oils (RA, GAO, MAIS) and of the enriched blends (M18, M19, M20) obtained after mixing and processing of the respective vegetable oil with the pâté was then analysed.

Laboratory analyses were performed to know the percentage contents of the following components:

1) Methyl esters of the fatty acids (AOCS Ce 2-66:2017 + AOCS Ce 1a-13:2017 Determination of the methyl esters of the fatty acids by gas chromatography)

C14:0 - myristic acid %;
C16:0 - palmitic acid %
C16:1 - palmitoleic acid %
C17:0 - heptadecanoic acid %
C17:1 - heptadecenoic acid %
C18:0 - stearic acid %
C18:1 - oleic acid %
C18:2 - linoleic acid %
C20:0 - arachidic acid %
C18:3 - linolenic acid %
C20:1 - eicosenoic acid %
C22:0 - behenic acid %
C22:1 - erucic acid %
C24:0 - lignoceric acid %

2) Trans isomers of the fatty acids

C18:1 - elaidic acid %

C18:2 + C18:3 %

The numeric results of these analyses are set out in Table 2 below:

Table 2

| Acronimo Campione | Composizione in acidi grassi (%) | | | | | | | | | | | | | | | |
|---|---|---|---|---|---|---|---|---|---|---|---|---|---|---|---|---|
| | C14:0 | C16:0 | C16:1 | C17:0 | C17:1 | C18:0 | C18:1 | C18:2 | C20:0 | C18:3 | C20:1 | C22:0 | C22:1 | C24:0 | C18:1T | C18:2T |
| EVO | 0,01 | 11,49 | 0,50 | 0,05 | 0,07 | 2,41 | 76,91 | 6,67 | 0,47 | 0,76 | 0,45 | 0,14 | nd | 0,07 | 0,02 | 0,01 |
| OR | 0,01 | 11,50 | 0,50 | 0,10 | 0,10 | 2,50 | 74,90 | 8,20 | 0,50 | 0,90 | 0,50 | 0,20 | nd | 0,10 | 0,02 | 0,01 |
| GAO | 0,05 | 4,60 | 0,20 | nd | nd | 3,00 | 81,70 | 8,40 | 0,30 | 0,10 | 0,30 | 1,00 | nd | 0,40 | 0,04 | 0,02 |
| M19 | 0,05 | 5,20 | 0,20 | nd | 0,10 | 3,00 | 81,20 | 8,30 | 0,30 | 0,20 | 0,30 | 0,90 | nd | 0,30 | 0,04 | 0,02 |
| M19 calcolato | **0,05** | **5,19** | **0,23** | **0,00** | **0,00** | **2,96** | **81,12** | **8,38** | **0,32** | **0,17** | **0,32** | **0,93** | **0,00** | **0,37** | **0,04** | **0,02** |
| MAIS | 0,04 | 11,60 | 0,10 | 0,10 | nd | 1,90 | 30,70 | 53,50 | 0,40 | 1,00 | 0,30 | 0,20 | nd | 0,20 | 0,03 | 0,28 |
| M20 | 0,03 | 11,60 | 0,20 | 0,10 | nd | 1,90 | 34,50 | 49,60 | 0,40 | 1,00 | 0,30 | 0,20 | nd | 0,20 | 0,03 | 0,26 |
| M20 calcolato | **0,04** | **11,59** | **0,13** | **0,10** | **0,00** | **1,95** | **34,50** | **49,60** | **0,41** | **0,99** | **0,32** | **0,20** | **0,00** | **0,19** | **0,03** | **0,26** |
| RA | 0,02 | 13,36 | 0,95 | 0,13 | 0,18 | 3,51 | 69,96 | 10,09 | 0,55 | 0,69 | 0,31 | 0,16 | nd | 0,09 | 0,08 | 0,13 |
| M18 | 0,02 | 13,12 | 0,91 | 0,13 | 0,17 | 3,40 | 70,54 | 9,89 | 0,54 | 0,70 | 0,33 | 0,16 | nd | 0,09 | 0,08 | 0,12 |
| M18 calcolato | 0,02 | **13,14** | **0,90** | **0,13** | **0,17** | **3,39** | **70,54** | **9,87** | **0,54** | **0,71** | **0,33** | **0,16** | **0,00** | **0,09** | **0,07** | **0,12** |

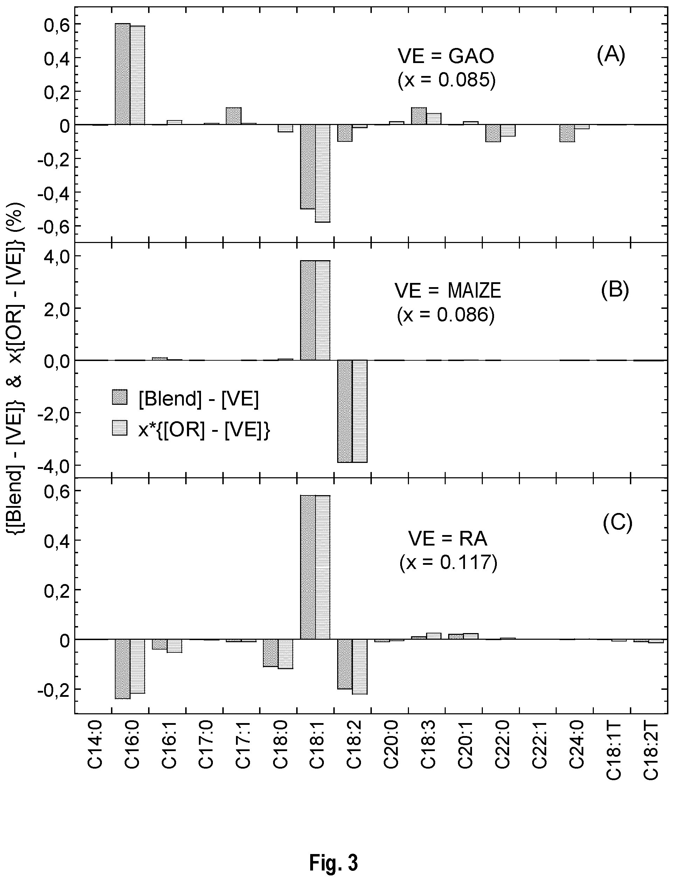

The data in bold in Table 2 are the values calculated with the equation (1), in which the respective x are listed in Figure 3.

These data were combined and used to ascertain whether, in terms of fatty acids composition, the enriched blends are disclosable as mixtures between the added vegetable oil and the residual olive oil in the pâté. The composition by weight of the mixture, x, is represented by the OR weight fraction in the mixture.

The estimate of the theoretical composition for each of the fatty acids of the blend, indicated by $[Blend_K]$, is made by hypothesizing the linear combination of the fatty acids contents of the added vegetable oil, indicated by $[VE_K]$, and of the fatty acids contents of the residual olive oil in the pâté, indicated by $[OR_K]$, on the basis of the equation:

$$[Blend_K] = x\,[OR_K] + (1\text{-}x)\,[VE_K] \qquad (1)$$

where x, being the fraction by weight of OR in the blend, is considered as a scale factor for all the fatty acids determined by the analyses.

By reworking the equation (1) we obtain:

$$[Blend_K] - [VE_K] = x\,\{[OR_K] - [VE_K]\}. \qquad (2)$$

The value of x is obtained by a fitting with the equation (2) of the data of Table 2, namely by optimizing (through the use of known mathematical instruments) the overlap among the differences in the composition of fatty acids of the oils in the equation (2).

From the fitting of the experimental results of the blend relating to GAO oil (sample M19 in Table 2) with the equation (2), $x = 0.085 \pm 0.057$ is obtained.

From the fitting of the experimental results of the blend relating to MAIS oil (sample M20 in Table 2), $x = 0.086 \pm 0.004$ is obtained.

From the fitting of the experimental results of the blend relating to RA oil (sample M18 in Table 2), $x = 0.117 \pm 0.015$ is obtained.

The relative error in determining x is significantly reduced in the case of the blend relating to MAIS oil. This is due to the fact that, compared with the residual olive oil in the pâté (OR), MAIS oil has a difference in the fatty acids composition that is quantitatively much more marked than the difference in the fatty acids composition that can be found in GAO oil and in RA oil, as it can be seen from the comparison of the data set out in Table 2.

Once the value of x has been calculated for each of the blends, it is possible to express graphically (Figure 3) the comparisons between the right and left parts of the equation (2) for all the single fatty acids. Figure 3 shows three bar graphs, illustrating:

- the difference in the fatty acids content of the enriched blend as compared to the added vegetable oil, indicated in the graph by [Blend] - [VE];
- the contribution to the aforesaid difference that is made by the presence in the blend of a fraction x by weight of OR that replaces a same amount of vegetable oil, which is indicated in the graph by x{[OR] - [VE]}. The value of x is the fraction by weight of OR hypothesized in the blend.

Graph A relates to the comparison between GAO oil and blend M19, graph B relates to the comparison between MAIS oil and blend M20, graph C relates to the comparison between RA oil and blend M18. For all three comparisons of Figure 3, great consistency is observed between the composition increases in fatty acids in the blend compared to the corresponding vegetable oils, and the composition increases in the same fatty acids that are estimated on the basis of the contribution made by the presence, in the blend, of a fraction x by weight of OR that replaces the same amount of vegetable oil. This consistency observed for each of the vegetable oils fully demonstrates the possibility of extracting the residual olive oil from the milling waste by adding a vegetable oil.

From the composition values in OR of the enriched blends (M18, M19 and M20) it is noted that all three detected values of x are relatively greater than the expected value of x, where expected x = 0.0706 on the basis of the residual olive oil content determined in the pâté by extraction with hexane solvent (1.9 % of the weight of the pâté) and on the basis of the weight ratio between pâté and added vegetable oil (4:1 for all the prepared enriched blends). The calculation of the expected value of x is as follows: $4 \times 1.9\%/(1 + 4 \times 1.9\%) = 0.0706$.

Moreover, as the extraction of the blend provided for by the method according to the invention is achieved through a mechanical separation (centrifugation) - similarly to what occurs in a normal milling process for producing virgin oil - it can be expected that also the aforesaid extraction will leave a residual part of oil phase in the waste.

Given the analogy of the applied centrifugation conditions, the aforesaid oil phase residue should be limited to a 2-3% value, similar to that of the residual olive oil in the waste exiting the mill. It can thus be assumed that the vegetable oil used in the method according to the invention replaces the olive oil remaining adhered to the waste exiting the mill, this enabling a good part of the residual olive oil to be recovered at the expense of a fraction of vegetable oil that remains in the exiting waste when the oil phase is separated mechanically.

In view of the obtained results, it can be concluded that 100 kg of pâté should contain at least 2.3 kg of olive oil. By mixing 25 kg of vegetable oil with 100 kg of pâté, 25 kg of blend can be extracted, which contain 2.15 kg of olive oil, and 2.15 kg of vegetable oil are lost.

Example 4 - Recovery of components determining the colour and unsaponifiable components

As shown in Table 1 (Example 2), for some of the samples (EVO, GAO, RA, M18, M19) the analysis of colour was performed, which colour was measured in terms of absorption in the visible (spectrophotometry) at two different wavelengths (420 nm and 453 nm), by inserting the samples into cells with a 1 cm optical path and using 50% hexane as a solvent. The aforesaid samples were also analyzed to determine the unsaponifiable component thereof, expressed in g/kg of oil.

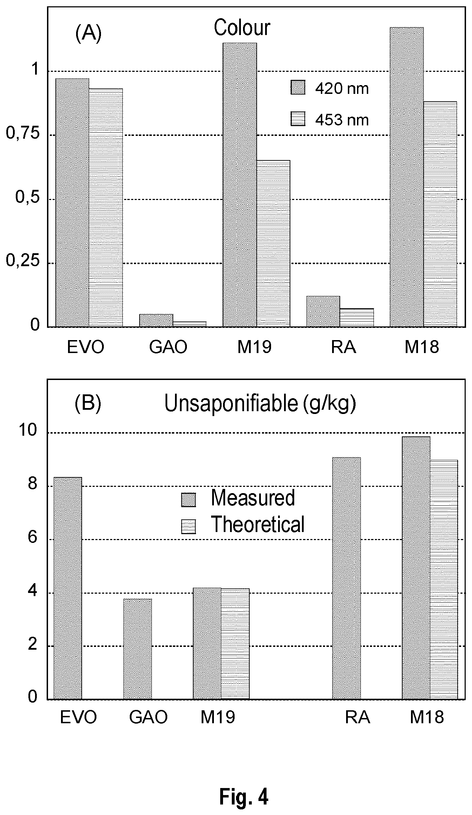

The purpose of these analyses was to acquire quantitative comparison data among the samples obtained by processing the vegetable oils with pâté and the EVO oil produced in the mill, as well as to highlight the great transfer, in the vegetable oil that was added and mixed with the waste, of both secondary components that determine the oil colour, and many other secondary components that contribute to the organoleptic and nutraceutical properties of the enriched blend. Graph A of Figure 4 shows the values relating to colour, measured on two different wavelengths (420 nm and 453 nm) of the visible spectrum (Law n.35 of 01/27/1968 - Art.3), corresponding to the contribution of β-carotene and chlorophyll, whereas graph B of Figure 4 shows the values of unsaponifiable component measured for the various samples.

With regard to the colour, it should be noted that both the blends that were enriched by passage in the waste (M19 and M18), although they are composed of approximately 90% of the corresponding (almost colourless) refined vegetable oil, they take on a colour intensity that is near the one of EVO of first extraction. This means that, although the added vegetable oils are almost colourless also due to the refining process undergone, once they are brought into contact with the olive milling waste - owing to the establishment of the chemical balance - they absorb the components that are characteristic of the olive (mainly β-carotene and chlorophyll), which give colour to the virgin olive oil.

With regard to the unsaponifiable part of the samples, it should be kept in mind that the composition of each oil has its own peculiar distribution of secondary components (about 200 chemical species). In the context of the experimental study conducted by the Applicants and Inventors, the unsaponifiable component was determined as a fraction by weight for each oil or blend of interest. For the enriched blends M18 and M19, a theoretical value was also calculated for comparison with the experimentally obtained data. The calculation of the theoretical value of unsaponifiable component for the blends M18 and M19 was made through a linear combination of the unsaponifiable component content of the starting vegetable oil (GAO or RA) and of the EVO (which is the residual olive oil in the pâté), by hypothesizing for the two enriched blends M18 and M19 the same composition detected through the fatty acids composition thereof shown in Figure 3.

From the comparison of the theoretical data and measured data for M18 and M19, it should be noted that in both cases the measured value exceeds the calculated value appreciably, this showing that the refined vegetable oil - typically depleted of various unsaponifiable components - in addition to being enriched with the residual olive oil present in the waste, is also enriched with a not negligible amount of unsaponifiable components of the olive that are recovered from the waste (i.e. pâté, in the case of the Examples). Owing to the solely mechanical and cold processing used in the method according to the invention, the aforesaid unsaponifiable components provide the enriched blends with nutraceutical and organoleptic properties that are similar to those of the EVO that was extracted together with the waste in the same milling. It can thus be concluded that the unsaponifiable component in the enriched blends is of a quality that is significantly higher than the one of the refined vegetable oil used.

Example 5 - Recovery of polyphenols

Polyphenols are included among the components of the unsaponifiable part and have great value, both from the nutraceutical point of view and from the point of view of preservability of the oil or oil blend.

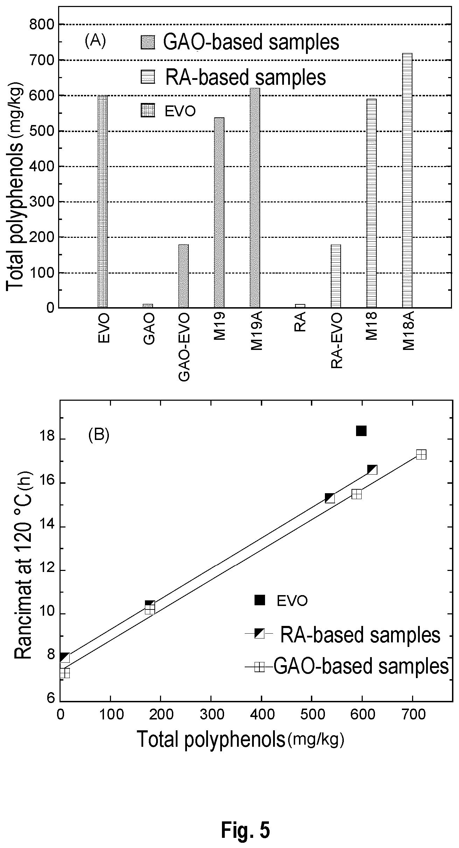

From the comparison of the polyphenols - more correctly phenolic compounds - measured (as tyrosol; method COI/T.20/Doc. No 29/Rev.2/ 2022) in the reference samples and in those prepared by applying the method according to the invention, very favourable analytical outcomes for the blends were found. From the data set out in Table 1 (Example 2) it is observed that the total polyphenol values measured on the two starting vegetable oils (GAO and RA) are practically zero, whereas the total polyphenols values measured on the oils that were enriched after passage in the waste (M18, M18A, M19, M19A, M20) are very close to those measured for the EVO of Coratina olives, complementary to the pâté used for the enrichments. The graphic comparison of the results is shown in graph A of Figure 5.

The data on total polyphenols also provide clear evidence of the efficacy of the cryoconcentration (processings A2 and A3 of Example 1) used to intensify the enrichment of the oil phase (M18 and M19) obtained by using processing A1. Starting from samples M18 and M19, processings A2 and A3 have enabled the corresponding cryo-enriched samples M18A and M19A to be obtained. In terms of total polyphenols, a difference equal to +22 % was observed between the sample M18A and the sample M18 that were prepared from RA oil, whereas a difference equal to +16 % was observed between the sample M19A and the sample M19 that were prepared from oil GAO.

In graph A of Figure 5 the total polyphenols values are also shown that were calculated for two comparative samples (GAO-EVO e RA-EVO) prepared in the laboratory by mixing the oils GAO and RA with 30 % by weight of Coratina extra virgin olive oil (EVO), namely about triple the amount of olive oil detected in the enriched samples M18 and M19. In Table 1 and in graph A of Figure 5 it is observed that total polyphenol content in the samples enriched by pâté (M18; M19) is significantly greater than the total polyphenol content in the samples obtained through simple mixing (RA-EVO; GAO-EVO). This highlights the abundant presence of polyphenols in the milling waste and the efficacy of the method according to the invention in recovering, owing to the action of the chemical balance, a considerable part of polyphenols from the vegetable oil added and processed with the waste.

Example 6 - Oxidation stability evaluation by Rancimat test

The Rancimat test was performed (in duplicate) on all the samples shown in Table 1 of Example 2, except for the OR sample (residual olive oil from pâté of Coratina olives), with the use of an apparatus of known type (Metrohm model 892 Professional) to determine the oxidation stability of the oils in accelerated mode. All the Rancimat tests were performed on 3 cc samples, at a temperature T = 120 °C and with an air flow equal to 20 L/h.

The results of the Rancimat tests (previously set out in Table 1 of Example 2 together with the results of the analysis of total polyphenols) are shown in graph B of Figure 5 in function of the total polyphenols. In the graph a direct correlation is observed between the increase of the Rancimat induction time compared to the value (mg/kg) of the total polyphenols in the sample. The RA- and GAO-based samples, i.e. the blends of vegetable oils enriched with the waste, show a Rancimat induction time that is more than double the Rancimat induction time of the starting refined vegetable RA or GAO oil.

In the method according to the invention, the cryoconcentration of the vegetation waters causes a further increase in induction time that is linearly proportional to the increase in total polyphenols transferred to the extracted vegetable oil blends.

Example 7 - Evaluation of the content in sterols and triterpene alcohols (Method COI/T.20/Doc. No.26 Rev. 5 June 2020)

It was shown above that the passage of vegetable oils into the olive-pomaces, carried out as provided for by the method according to the invention, enables the residual olive oil to be extracted from the olive-pomaces. The values of the terpenic di-alcohols (erythrodiol and uvaol), which are characteristic parameters of the olive-pomace oil extracted by solvents, do not increase after the passage of the vegetable oils into the olive-pomaces.

For example, the refined olive oil (RA) has a total initial value of erythrodiol and uvaol of 4.4 %. The sample M18, after the passage of RA in the olive-pomaces, has a total value of erythrodiol and uvaol equal to 4.3 %, namely a 0.1% reduction occurs although the sample M18 is enriched with the olive oil present in the olive-pomaces. The high oleic sunflower seed oil (GAO) has an initial zero total value of erythrodiol and uvaol since it is a seed oil. The sample M19, after the passage of GAO in the olive-pomaces, has a total erythrodiol and uvaol value of 1.0 %. This value is significantly less than the limit value of 4.5 % of a virgin olive oil, although the sample M19 is enriched with the olive oil present in the olive-pomaces.

The aforesaid results show that the extraction of the residual oil present in the fresh waste through the use of a vegetable oil, as provided for by the method according to the invention, enables an olive oil to be recovered that has qualitative parameters that are high and greater than those of the olive-pomace oil recovered chemically through the use of solvents.

Example 8 - Sensory analysis

The sensory analysis was performed by a professional taster following the IOOC panel test method (COI/T.20/Doc. 15/Rev. 10 2018 and COI/T.20/Doc. 22 of November 2005) on some of the samples listed in Table 1 of Example 2.

The results of the sensory analysis are set out in Table 3A and Table 3B, in which they are expressed in numerical (Table 3A) (method IOOC) and descriptive terms (Table 3B).

Table 3A

| Positive attributes | Samples | | | | | |
|---|---|---|---|---|---|---|
| | EVO | RA-EVO | M18 | M18A | M19 | M19A |
| Fruity mature | 0.0 | 3.0 | 3.0 | 3.0 | 2.0 | 2.0 |
| Fruity green | 5.5 | 0.0 | 0.0 | 0.0 | 0.0 | 0.0 |
| Bitter | 5.3 | 2.0 | 5.0 | 6.0 | 6.0 | 7.0 |
| Spicy | 5.4 | 2.0 | 5.0 | 7.0 | 6.0 | 7.0 |
| Astringent | 4.5 | 0.0 | 5.0 | 7.0 | 6.0 | 7.0 |
| Leaf green | 4.5 | 0.0 | 0.0 | 0.0 | 0.0 | 0.0 |
| Grass green | 3.0 | 0.0 | 0.0 | 0.0 | 0.0 | 0.0 |
| Almond | 4.2 | 0.0 | 0.0 | 0.0 | 0.0 | 0.0 |
| Artichoke | 3.5 | 0.0 | 0.0 | 0.0 | 0.0 | 0.0 |
| Tomato | 0.0 | 0.0 | 0.0 | 0.0 | 0.0 | 0.0 |
| Nut | 0.0 | 0.0 | 0.0 | 0.0 | 0.0 | 0.0 |
| Other ripe fruit | 0.0 | 0.0 | 0.0 | 0.0 | 0.0 | 0.0 |

Table 3B

| | |
|---|---|
| EVO | The oil features a medium-intense green olive fruitiness, complex and harmonious, with distinct hints of leaf, grass, almond, and artichoke. On the palate, the oil has an enveloping and distinct almond aftertaste, a medium-intense bitter and spicy taste. The oil has a balanced and persistent aroma and flavor profile. The colour is green-yellow. |
| RA-EVO | Slightly fruity oil with intense bitter and spicy and intense astringent taste. The colour is light green-yellow. |
| M18 | Slightly fruity oil with medium bitter and spicy and astringent taste. The colour is green-yellow. |
| M18A | Slightly fruity oil with intense bitter and spicy and intense astringent taste. The colour is intense green-yellow. |
| M19 | Slightly fruity oil with medium-intense bitter and spicy and astringent taste. The colour is green-yellow. |
| M19A | Slightly fruity oil with intense bitter and spicy and astringent taste.. The colour is intense green-yellow. |

All the prepared samples exhibited a character (bitter, spicy and astringent) and a colour that are similar to those of the EVO. The blends M18A and M19A, which were subjected to cryoconcentration, show more pronounced sensorial and chromatic properties than the samples that were not subjected to the cryoconcentration. The RA-EVO blend, prepared from the RA vegetable oil by adding 30% by weight of EVO, has less intense sensorial and chromatic properties than the blends produced by enrichment from pâté. To sum up, enriching a vegetable oil through the milling waste (pâté) enables a blend to be obtained that has characteristics that are close to EVO oil extracted together with the waste.

From what has been disclosed above, it can be stated that the method for enriching vegetable oils according to the invention enables the drawbacks to be overcome that affect known methods. In fact, the method according to the invention enables oil and nutraceutical and organoleptic compounds to be recovered from the olive milling waste, so as to obtain products that are rich in nutraceutical and organoleptic compounds. These products are marketable at prices that are substantially lower than the prices of the olive oil and are thus validly usable as olive oil substitutes. Moreover, the method according to the invention is implementable only by mechanical processings, at a low temperature and without using solvents.

Variations on and/or additions to what has been disclosed above and/or shown in the Figures are moreover possible. In particular, although the method according to the invention was implemented on the laboratory scale, the person skilled in the art is able to select and use apparatuses that are suitable for an application of the method on an industrial scale.

**Claims**

1. Method for recovering oil and nutraceutical and organoleptic compounds from olive milling waste, comprising the following steps:

   a) Adding a food grade vegetable oil to waste coming from a first extraction of a virgin olive oil, wherein said waste contains vegetation waters and olive-pomace containing residual olive oil;
   b) Mixing said food grade vegetable oil with said waste, so as to obtain a multiphase mixture comprising an oil phase, an aqueous phase and a solid phase, wherein said oil phase comprises said residual olive oil and said food grade vegetable oil, said aqueous phase comprises said vegetation waters and said solid phase comprises said olive-pomace;
   c) Subjecting to mechanical separation said multiphase mixture, so as to obtain separately said olive-pomace, said vegetation waters and an enriched must-blend comprising said residual olive oil and said food grade vegetable oil, said enriched must-blend being enriched with said nutraceutical and organoleptic compounds;
   d) Discarding said olive-pomace and subjecting said vegetation waters to cryoconcentration, so as to obtain concentrated vegetation waters and frozen vegetation waters;
   e) Discarding said frozen vegetation waters and mixing said concentrated vegetation waters with said enriched must-blend, so as to obtain a mixture consisting of said concentrated vegetation waters and said enriched must-blend;
   f) Subjecting to mechanical separation said mixture consisting of said concentrated vegetation waters and said enriched must-blend, so as to obtain separately vegetation waters, to be discarded, and a cryo-enriched oil blend consisting of said food grade vegetable oil and said residual olive oil, said cryo-enriched oil blend being enriched with said nutraceutical and organoleptic compounds.

2. Method for recovering oil and nutraceutical and organoleptic compounds from olive milling waste, comprising the following steps:

   a) Mixing waste coming from a first extraction of a virgin olive oil, wherein said waste contains vegetation waters and olive-pomace containing residual olive oil, so as to obtain a multiphase mixture comprising an oil phase, an aqueous phase and a solid phase, wherein said oil phase comprises said residual olive oil, said aqueous phase comprises said vegetation waters and said solid phase comprises said olive-pomace;
   b) Subjecting to mechanical separation said multiphase mixture, so as to obtain separately said olive-pomace containing residual olive oil, said vegetation waters and an oil-must containing part of said residual olive oil;
   c) Subjecting said vegetation waters to cryoconcentration, so as to obtain concentrated vegetation waters and frozen vegetation waters;
   d) Discarding said frozen vegetation waters, adding a food grade vegetable oil and mixing together said food grade vegetable oil, said concentrated vegetation waters, said olive-pomace and said oil-must obtained from the mechanical separation of said multiphase mixture, so as to obtain a mixture consisting of said food grade vegetable oil, said concentrated vegetation waters, said olive-pomace and said oil-must;
   e) Subjecting to mechanical separation said mixture consisting of said food grade vegetable oil, said concentrated vegetation waters, said olive-pomace and said oil-must, so as to obtain separately wet waste, to be discarded, consisting of said olive-pomace and vegetation waters, and a cryo-enriched must-blend comprising said food grade vegetable oil and said residual olive oil, said cryo-enriched must-blend being enriched with said nutraceutical and organoleptic compounds;
   f) Subjecting to mechanical separation said cryo-enriched must-blend, so as to obtain separately further vegetation waters, to be discarded, and a cryo-enriched oil blend consisting of said food grade vegetable oil and said residual olive oil, said cryo-enriched oil blend being enriched with said nutraceutical and organoleptic compounds.

3. Method according to claim 1, or 2, wherein, in said adding a food grade vegetable oil, an amount of said vegetable oil is added that is such as to obtain a mixing ratio between said waste and said vegetable oil varying from 2:1 to 10:1.

4. Method according to claim 3, wherein, in said adding a food grade vegetable oil, an amount of said vegetable oil is added such as to obtain a mixing ratio between said waste and said vegetable oil of 4:1.

5. Method according to any one of claims 1 to 4, wherein said food grade vegetable oil is selected from the group consisting of olive oil, high oil sunflower seed oil, maize seed oil, and mixtures thereof.

6. Method according to any one of claims 1 to 5, wherein said steps a) - f) are carried out at a temperature not exceeding 27°C and at atmospheric pressure.

7. Method according to any one of claims 1 to 6, wherein, in said mixing, a turbomixer and/or a kneading machine are used.

8. Method according to any one of claims 1 to 7, wherein, in said subjecting to mechanical separation, an apparatus is used that is selected from the group consisting of a three-phase decanter, a two-phase decanter and a vertical centrifuge.

9. Method according to any one of claims 1 to 8, wherein, in said subjecting to cryoconcentration, a cryoconcentrator is used.

FORMATION OF OIL BLEND AND ENRICHMENT FROM WASTE

CRYOCENTRATION OF VEGETATION WATERS AND ENRICHMENT OF OIL FRACTION

**Fig. 1**

EP 4 681 549 A1

**(A)**

```
┌──────────┐   ┌──────────┐
│  Frozen  │   │Vegetable │
│  waste   │   │   Oil    │
└──────────┘   └──────────┘
       │             │
       ↓             ↓
      Thermomixer
      27 °C, 1 min at speed 6
(A1)    + 3m at speed 3)
              │
              ↓
          Centrifuge
      ┌───────┼───────┐
      ↓       ↓       ↓
dry olive-pomace vegetation  ┌──────────┐
(to be discarded)  waters    │enriched oil│
                             │  blend   │
                             └──────────┘
                      │            │
```

(A2)            Partial freezing
            ┌───────┴───────┐
            ↓               ↓
         (50%)        (50%) concentrated
          ice         vegetation waters
      (to be discarded)

```
              ↓            ↓
           Thermomixer
      (27 °C, 1 min at speed 6
(A3)      + 3m at speed 3)
              │
              ↓
          Centrifuge
      ┌───────┴───────┐
      ↓               ↓
vegetation waters  ┌──────────┐
(to be discarded)  │cryo-enriched│
                   │ oil blend │
                   └──────────┘
```

**(B)**

```
           ┌──────────┐
           │  Frozen  │
           │  waste   │
           └──────────┘
                │
                ↓
           Thermomixer
            (27 °C)
(B1)            │
                ↓
            Centrifuge
        ┌───────┴───────┐
        ↓               ↓
      dry          vegetation
  olive-pomace       waters
                        │
                        ↓
                 Partial freezing
              ┌─────────┴─────────┐
              ↓                   ↓
        (50%) concentrated     (50%)
        vegetation waters       ice
                            (to be discarded)
```

```
                              ┌──────────┐
                              │Vegetable │
                              │   oil    │
                              └──────────┘
              ↓         ↓        ↓
           Thermomixer
      (27 °C, 1 min at speed 6
(B2)      + 3m at speed 3)
              │
              ↓
          Centrifuge
      ┌───────┴───────┐
      ↓               ↓
vegetation waters  ┌──────────┐
to be discarded)   │cryo-enriched│
                   │ oil blend │
                   └──────────┘
```

**Fig. 2**

Fig. 3

Fig. 4

Fig. 5

**(A)**

```
┌──────────────────┐   ┌──────────┐
│ Fresh waste from │   │vegetable │
│ first extraction │   │   oil    │
│ of virgin olive  │   └──────────┘
│       oil        │
└──────────────────┘
```

Turbomixer

(A1) Kneading machine (at 27 °C)

3-phase decanter

dry olive-pomace    vegetation    enriched
(to be discarded)     waters     must-blend

Cryoconcentrator

(A2)

(>50%)              (<50%)
ice                 concentrated
(to be discarded)   vegetation
                    waters (27 °C)

Turbomixer

(A3)    Vertical centrifuge

Vegetation waters        ┌──────────────┐
(to be discarded)        │ Cryo-enriched│
                         │   oil blend  │
                         └──────────────┘

**(B)**

```
┌──────────────────┐
│ Fresh waste from │
│ first extraction │
│ of virgin olive  │
│       oil        │
└──────────────────┘
```

Kneading machine (at 27 °C)
(B1)

3-phase decanter

vegetation       oil-must   dry olive-pomace
waters

Cryoconcentrator

(>50%)              (<50%)
ice                 concentrated
(to be discarded)   vegetation
                    waters (27 °C)

┌──────────┐
│vegetable │
│   oil    │
└──────────┘

Turbomixer

(B2) Kneading machine (at 27 °C)

2-phase decanter

wet waste            Cryo-enriched
(to be discarded)    must-blend

                     Vertical centrifuge

Vegetation waters    ┌──────────────┐
(to be discarded)    │ Cryo-enriched│
                     │   oil blend  │
                     └──────────────┘

**Fig. 6**

| | Europäisches Patentamt European Patent Office Office européen des brevets | **EUROPEAN SEARCH REPORT** | **Application Number** EP 25 18 5477 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AZZAM MOHAMMED O J ET AL: "Olive mill wastewater treatment and valorization by extraction/concentration of hydroxytyrosol and other natural phenols", PROCESS SAFETY AND ENVIRONMENTAL PROTECTION, INSTITUTION OF CHEMICAL ENGINEERS, RUGBY, GB, vol. 148, 20 October 2020 (2020-10-20), pages 495-523, XP086528269, ISSN: 0957-5820, DOI: 10.1016/J.PSEP.2020.10.030 [retrieved on 2020-10-20] * page 497, column 2 * ----- | 1-9 | INV. A23L19/00 C11B3/00 |
| A | PT 1 633 204 E (NATRACEUTICAL SA [ES]) 30 April 2007 (2007-04-30) * figure 1; example 1 * ----- | 1-9 | |
| A | Ratnasonia Samantha G ET AL: "ENVIRONMENTALLY FRIENDLY PHENOL FRACTION EXTRACTION FROM SARGASSUM SP. USING OLIVE OIL AS A SOLVENT", , 1 January 2019 (2019-01-01), XP093236982, Retrieved from the Internet: URL:https://repository.unej.ac.id/handle/123456789/97335 [retrieved on 2025-01-07] * page 18 * ----- -/-- | 1-9 | TECHNICAL FIELDS SEARCHED (IPC) A23L C11B |

The present search report has been drawn up for all claims

| Place of search | Date of completion of the search | Examiner |
|---|---|---|
| The Hague | 25 November 2025 | Rooney, Kevin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 18 5477

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EL HAIMER YOUNESS ET AL: "Olive oil mill wastewater treatment by a combined process of freezing, sweating and thawing", DESALINATION AND WATER TREATMENT, vol. 257, 1 May 2022 (2022-05-01), pages 158-168, XP093236672, GB ISSN: 1944-3986, DOI: 10.5004/dwt.2022.28581 * abstract; figure 1 * | 1-9 | |
| A | EP 2 526 785 B1 (PHENOFARM S R L [IT]) 21 June 2017 (2017-06-21) * the whole document * | 1-9 | |
| A | US 2008/014322 A1 (IBARRA ALVIN [ES] ET AL) 17 January 2008 (2008-01-17) * paragraph [0053]; example 1 * | 1-9 | |
| A | US 2010/069313 A1 (ULM JOHANN [CH] ET AL) 18 March 2010 (2010-03-18) * paragraph [0063] * * the whole document * | 1-9 | TECHNICAL FIELDS SEARCHED (IPC) |
| A | ES 2 927 301 A2 (CONSEJO SUPERIOR INVESTIGACION [ES]; UNIV SEVILLA [ES]) 3 November 2022 (2022-11-03) * the whole document * | 1-9 | |

The present search report has been drawn up for all claims

| Place of search | Date of completion of the search | Examiner |
|---|---|---|
| The Hague | 25 November 2025 | Rooney, Kevin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 5477

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2025

| Patent document cited in search report | | Publication date | Patent family member(s) | | Publication date |
|---|---|---|---|---|---|
| PT 1633204 | E | 30-04-2007 | AT | E349914 T1 | 15-01-2007 |
| | | | DE 602004004121 T2 | | 11-10-2007 |
| | | | EP | 1633204 A2 | 15-03-2006 |
| | | | ES | 2280029 T3 | 01-09-2007 |
| | | | PT | 1633204 E | 30-04-2007 |
| | | | WO | 2004110171 A2 | 23-12-2004 |
| EP 2526785 | B1 | 21-06-2017 | EP | 2526785 A1 | 28-11-2012 |
| | | | ES | 2641069 T3 | 07-11-2017 |
| | | | PT | 2526785 T | 05-09-2017 |
| | | | US | 2012302515 A1 | 29-11-2012 |
| US 2008014322 | A1 | 17-01-2008 | EP | 1755412 A1 | 28-02-2007 |
| | | | GB | 2415136 A | 21-12-2005 |
| | | | JP | 2008502339 A | 31-01-2008 |
| | | | US | 2008014322 A1 | 17-01-2008 |
| | | | WO | 2006005986 A1 | 19-01-2006 |
| US 2010069313 | A1 | 18-03-2010 | CN | 101557727 A | 14-10-2009 |
| | | | EP | 1938698 A1 | 02-07-2008 |
| | | | EP | 2106218 A1 | 07-10-2009 |
| | | | JP | 2010511393 A | 15-04-2010 |
| | | | KR | 20090095581 A | 09-09-2009 |
| | | | US | 2010069313 A1 | 18-03-2010 |
| | | | WO | 2008067976 A1 | 12-06-2008 |
| ES 2927301 | A2 | 03-11-2022 | ES | 2927301 A2 | 03-11-2022 |
| | | | WO | 2021180996 A1 | 16-09-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **DI GIOVACCHINO, L.** ; **PREZIUSO, S.M.** ; **DI SERIO, M.G.** ; **MUCCIARELLA, M.R.** ; **DI LORETO, G.;** ; **LANZA, B.** Double extraction of olive oil in large oil mills of Southern ,Italy: Effects on extraction efficiency, oil quality, and economy of the process.. *Eur. J. Lipid Sci. Technol.*, 2017, vol. 119, 1600161
- **SÁNCHEZ MORAL, P.** ; **RUIZ MÉNDEZ, V.** Production of pomace olive oil.. *Grasas Y Aceites*, 2006, vol. 57 (1), 47-55
- **STRAMARKOU, M.** ; **MISSIRLI, T.-V.** ; **KYRIAKO-POULOU, K.** ; **PAPADAKI, S.** ; **ANGELIS-DIMAKIS, A.** ; **KROKIDA, M.** The Recovery of Bioactive Compounds from Olive Pomace Using Green Extraction Processes.. *Resources*, 2023, vol. 12, 77
- **GRIGOLETTO, I.** ; **GARCIA SALAS, P** ; **VALLI, E.** ; **BENDINI, A.** ; **FERIOLI, F** ; **PASINI, F.** ; **SÁNCHEZ VILLASCLARAS, S.** ; **GARCIA-RUIZ, R.** ; **GALLINA TOSCHI, T.** HPLC-MSIMS Phenolic Characterization of Olive Pomace Extracts Obtained Using an Innovative Mechanical Approach.. *Foods*, 2024, vol. 13, 285
- **TUFARIELLO, M.** ; **DURANTE, M.** ; **BLEVE, G** ; **VENEZIANI, G.** ; **TATICCHI, A.** ; **SERVILI, M** ; **MITA, G.** Patè olive cake: Possible exploitation of a by-product for food applications.. *Front. Nutr.*, 2019, vol. 8, 83
- **LEO A.** ; **HANSCH, C** ; **ELKINS, D.** Partition coefficients and their uses. *Chem. Rev.*, 1971, vol. 71 (6), 525-616